# FASCICULE DE BREVET EUROPEEN

(11) **EP 3 707 146 B1**
(45) Date de publication et mention de la délivrance du brevet: **15.05.2024**
(21) Numéro de dépôt: 18821706.1
(22) Date de dépôt: 08.11.2018
(51) Int. Cl.: C07F 9/09, C11D 3/36, C11D 11/00, C23F 11/167

(54) **ESTER DE PHOSPHATE D'ALCOOL SECONDAIRE**
SEKUNDÄRES ALKOHOL-PHOSPHAT-ESTER
SECONDARY ALCOHOL PHOSPHATE ESTER

(30) Priorité: 10.11.2017 FR 1760587
(43) Date de publication de la demande: 16.09.2020
(73) Titulaire: Arkema France, 92700 Colombes (FR)
(72) Inventeur: GONZALEZ LEON, Juan Antonio, 69008 Lyon (FR); GILLET, Jean-Philippe, 69530 Brignais (FR); BARRETO, Gilles, 69510 Messimy (FR); BOURET, Carl, 36000 Chateauroux (FR)
(86) Numéro de dépôt international: PCT/FR2018/052762
(87) Numéro de publication internationale: WO 2019/092367

(56) Documents cités:
- FR-A1- 2 138 763
- JP-A- H0 920 874
- JP-A- S60 119 265
- US-A- 5 611 991

## Description

La présente invention concerne le domaine général des alcools secondaires alcoxylés.

La présente invention concerne le domaine général des esters de phosphate d'alcool secondaire, c'est-à-dire les alcools secondaires alcoxylés auxquels on fait subir une réaction de phosphatation.

La phosphatation des alcools organiques est une voie bien connue pour obtenir des esters de phosphate des alcools organiques. Les esters de phosphate d'alcools gras sont connus en tant que tensioactifs dans différentes applications. En effet, ils sont dotés d'un certain nombre de propriétés uniques en comparaison avec d'autres tensioactifs cationiques et anioniques.

L'intermédiaire principal pour la synthèse des esters de phosphates d'alcools organiques est l'alcool organique lui-même. Différentes propriétés pour un ester de phosphate d'alcool peuvent être obtenues, selon l'alcool organique choisi comme matière première.

Les alcools organiques utilisés pour synthétiser ces phosphates peuvent être de nature très différente, par exemple : linéaires ou ramifiés, de petite ou grande masse molaire, mono ou plurifonctionnel, entre autres.

Ils peuvent être aussi des alcools organiques, qui ont subi une étape d'alcoxylation, où un ou plusieurs motifs d'un oxyde d'alkyle, par exemple d'oxyde d'éthylène ou oxyde de propylène, ont été incorporés à l'alcool organique.

La synthèse des esters de phosphate d'alcools organiques présente un réel intérêt industriel, si cette synthèse est simple et peu onéreuse, notamment à partir de matières premières disponibles et facilement modifiables pour obtenir des propriétés différentes. Par exemple, la demande FR2138763 décrit des phosphates obtenus par réaction d'acide polyphosphorique et d'un produit de condensation d'alcool primaire avec de l'oxyde d'éthylène.

En outre, à l'heure où l'enjeu environnemental est véritablement important, l'utilisation d'un réactif bio-sourcé ou biodégradable et présentant un bon profil écotoxicologique est intéressante à envisager.

Les alcoxylats d'alcools secondaires représentent une famille de composés offrant un large éventail de propriétés. En effet, les applications sont multiples. Ils peuvent notamment être utilisés en tant que solvant, hydrotrope ou encore tensioactif non ionique. Ils peuvent également jouer le rôle de matière première pour d'autres composés tels que les étheramines ou des tensioactifs anioniques obtenus par phosphatation ou sulfatation. Ainsi, les alcoxylats d'alcools secondaires constituent une classe de composés revêtant un intérêt industriel majeur pour de nombreux acteurs.

De manière classique, les alcoxylats d'alcools secondaires sont synthétisés à l'aide d'une catalyse basique, en utilisant par exemple de l'hydroxyde de potassium. Un autre type de catalyseur peut également être employé, le catalyseur de type cyanure dimétallique, appelé catalyseur DMC. Divers documents font référence à l'alcoxylation de divers composés, dont les alcools, par une catalyse basique et/ou par une catalyse DMC.

Ainsi, il est recherché un ester de phosphate d'alcool secondaire, ledit alcool étant à chaîne courte et alcoxylé, dont l'alcoxylation est réalisée par un procédé simple et permet un développement industriel et commercial à faible coût. Il serait également avantageux de développer un procédé de préparation de ces esters de phosphate mettant en oeuvre des alcools secondaires alcoxylés dont le composé de départ est un réactif bio-sourcé et biodégradable.

La présente invention a pour objet de proposer une solution permettant de résoudre les problèmes mentionnés ci-dessus.

L'invention a pour objet un composé de formule (I) suivante, ainsi que ses sels d'addition avec une base organique ou minérale, les solvates, tels que les hydrates, et leurs mélanges : 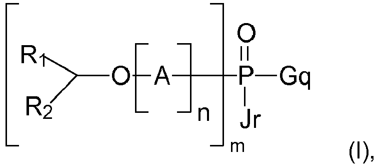 dans laquelle :
- les groupements R₁ et R₂, identiques ou différents, représentent, indépendamment l'un de l'autre, un groupement hydrocarboné linéaire, ramifié ou cyclique, saturé ou insaturé, comprenant de 1 à 6 atomes de carbone, étant entendu que la somme des atomes de carbone des groupements R₁ et R₂ va de 2 à 7, R₁ et R₂ peuvent former ensemble et avec l'atome de carbone qui les porte, un cycle à 6, 7 ou 8 sommets,
- n est un nombre entier compris entre, bornes incluses, 1 et 100, de préférence entre 2 et 100, de préférence encore entre 3 et 100, plus particulièrement entre 5 et 100, et de manière très préférée entre 10 et 100,
- A représente un enchaînement d'un ou plusieurs motifs choisis parmi les motifs oxyde d'éthylène, oxyde de propylène, oxyde de butylène et leurs mélanges,
- G désigne le groupe -O-[B]p-R₅,
où R₅ représente un groupement choisi parmi l'atome d'hydrogène ou un groupe hydrocarboné linéaire, ramifié ou cyclique, saturé ou insaturé, comprenant de 1 à 30 atomes de carbone, B représente un enchaînement d'un ou plusieurs motifs choisis parmi les motifs oxyde d'éthylène, oxyde de propylène, oxyde de butylène, et leurs mélanges et p désigne un nombre entier allant de 0 à 100,
- J désigne le groupe -O-[E]ₛ₋R₆,
où R₆ représente un groupement choisi parmi l'atome d'hydrogène ou un groupe hydrocarboné linéaire, ramifié ou cyclique, saturé ou insaturé, comprenant de 1 à 30 atomes de carbone, E représente un enchaînement d'un ou plusieurs motifs choisis parmi les motifs oxyde d'éthylène, oxyde de propylène, oxyde de butylène et leurs mélanges et s désigne un nombre entier allant de 0 à 100,
- m désigne un nombre entier allant de 1 à 3,
- q et r désignent des nombres entiers allant de 0 à 2,
étant entendu que m + q + r = 3.

La présente invention a également pour objet les sels des composés décrits dans la formule (I) avec un ou plusieurs groupements cationiques porteurs d'au moins un cation choisi parmi un cation ammonium, un cation métallique, un cation azoté, un cation boré et un cation phosphoré.

Des exemples de ces sels peuvent être décrits par la formule (II) suivante : 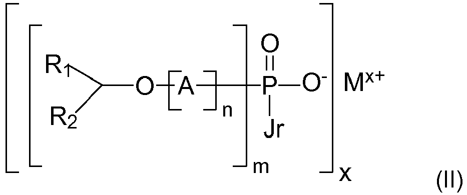 dans laquelle :
- M^{x+} représente un groupement cationique porteur d'au moins un cation choisi parmi un cation ammonium, un cation métallique, un cation azoté, un cation boré et un cation phosphoré,
- x est un nombre entier allant de 1 à 7, et
- les autres variables étant telles que définies dans la formule (I) *supra.*

La formule (II) est issue de la formule (I), dans laquelle q désigne 1, p désigne 0 et R₅ représente un atome d'hydrogène labile.

La présente invention a également pour objet un mélange des composés décrits dans la formule (I) et des sels des composés décrits dans la formule (I) avec des cations métalliques et des composés organiques incluant des amines, exemplifiés dans la formule (II).

Un autre objet de l'invention est l'utilisation du composé de formule (I) selon l'invention et ses sels, en tant qu'agent tensioactif, agent tensio-actif à faible pouvoir moussant (« low-foaming surfactant » en langue anglaise), agent de mouillage, agent moussant, hydrotrope, détergent, solvant, solvant réactif, agent de coalescence, compatibilisant, agent émulsifiant, dispersant, intermédiaire chimique, inhibiteur de corrosion, désémulsionnant, plastifiant, séquestrant, inhibiteur de dépôts minéraux, liquide ionique, stabilisant, lubrifiant, additif pour bitumes, additif pour désencrage, agent gélifiant dans les huiles, collecteur de flottation pour les minerais, adjuvant de fabrication (« processing aid » en langue anglaise) dans la manufacture des objets plastiques, agent antistatique, additif pour les revêtements d'engrais, pour la protection des plantes, pour le traitement des textiles et pour la récupération assistée du pétrole, pour la production d'électrodes et d'électrolytes pour batteries.

D'autres avantages et caractéristiques de l'invention apparaitront plus clairement à l'examen de la description détaillée.

Il est précisé que les expressions « de... à... » utilisées dans la présente description doivent s'entendre comme incluant chacune des bornes mentionnées.

Au sens de la présente invention, on entend par « motif oxyde d'éthylène» le motif issu de l'oxyde d'éthylène après ouverture du cycle oxirane. Au sens de la présente invention, on entend par « motif oxyde de propylène» le motif issu de l'oxyde de propylène après ouverture du cycle oxirane. Au sens de la présente invention, on entend par « motif oxyde de butylène » le motif issu de l'oxyde de butylène après ouverture du cycle oxirane.

Le composé selon l'invention est de formule (I) telle que mentionnée ci-dessus.

En d'autres termes, les groupements R₁ et R₂, et le carbone auquel ils sont rattachés désignent un radical secondaire en C₃-C₈, de préférence en C₄-C₈, plus particulièrement en C₅-C₈ de préférence en C₆-C₈.

De préférence, les groupements R₁ et R₂, identiques ou différents, représentent, indépendamment l'un de l'autre, méthyle, éthyle, n-propyle, iso-propyle, n-butyle, sec-butyle, tert-butyle, pentyles, hexyles.

De préférence, le groupe formé par R₁, R₂ et l'atome de carbone, auquel R₁ et R₂ sont attachés, est choisi parmi le radical 2-octyle et le radical 4-méthyl-2-pentyle. Plus particulièrement, le groupe formé par R₁, R₂ et l'atome de carbone, auquel R₁ et R₂ sont attachés, est le radical 2-octyle.

Avantageusement, n est compris entre, bornes incluses, 1 et 75, de préférence entre 2 et 75, de préférence encore entre 3 et 75, plus particulièrement entre 5 et 75, et de manière très préférée entre 10 et 75.

Avantageusement, n est compris entre, bornes incluses, 1 et 50, de préférence entre 2 et 50, de préférence encore entre 3 et 50, plus particulièrement entre 5 et 50, et de manière très préférée entre 10 et 50.

Avantageusement, n, est compris entre, bornes incluses, 1 et 30, de préférence entre 2 et 30, de préférence encore entre 3 et 30, plus particulièrement entre 5 et 30, et de manière très préférée entre 10 et 30.

Avantageusement, p et s, indépendamment l'un de l'autre sont compris entre, bornes incluses, 0 et 75, de préférence entre 1 et 75, plus préférentiellement entre 2 et 75, de préférence encore entre 3 et 75, plus particulièrement entre 5 et 75, et de manière très préférée entre 10 et 75.

Avantageusement, p et s, indépendamment l'un de l'autre sont compris entre, bornes incluses, 0 et 50, de préférence entre 1 et 50, plus préférentiellement entre 2 et 50, de préférence encore entre 3 et 50, plus particulièrement entre 5 et 50, et de manière très préférée entre 10 et 50.

Avantageusement, p et s, indépendamment l'un de l'autre sont compris entre, bornes incluses, 0 et 30, de préférence entre 1 et 30, plus préférentiellement entre 2 et 30, de préférence encore entre 3 et 30, plus particulièrement entre 5 et 30, et de manière très préférée entre 10 et 30.

De préférence, n va de 2 à 30.

A, B et E, indépendamment les uns des autres représentent un enchaînement d'un ou plusieurs motifs choisis parmi les motifs oxyde d'éthylène, oxyde de propylène, oxyde de butylène et leurs mélanges.

Selon un mode de réalisation particulier, lorsque le composé de formule (I) comporte un mélange desdits motifs différents, ils peuvent être répartis de manière aléatoire, alternée ou par blocs.

Selon un mode de réalisation préféré, A représente un enchaînement d'au moins un motif oxyde d'éthylène et d'au moins un motif oxyde de propylène, répartis de manière alternée, aléatoire ou par blocs. Selon encore un autre mode de réalisation préféré, A représente un enchaînement d'au moins un motif oxyde d'éthylène et d'au moins un motif oxyde de butylène, répartis de manière alternée, aléatoire ou par blocs.

Selon encore un autre mode de réalisation préféré, A représente un enchaînement d'au moins un motif oxyde de propylène et d'au moins un motif oxyde de butylène, répartis de manière alternée, aléatoire ou par blocs.

Selon un mode de réalisation préféré, B représente un enchaînement d'au moins un motif oxyde d'éthylène et d'au moins un motif oxyde de propylène, répartis de manière alternée, aléatoire ou par blocs.

Selon encore un autre mode de réalisation préféré, B représente un enchaînement d'au moins un motif oxyde d'éthylène et d'au moins un motif oxyde de butylène, répartis de manière alternée, aléatoire ou par blocs.

Selon encore un autre mode de réalisation préféré, B représente un enchaînement d'au moins un motif oxyde de propylène et d'au moins un motif oxyde de butylène, répartis de manière alternée, aléatoire ou par blocs.

Selon un mode de réalisation préféré, E représente un enchaînement d'au moins un motif oxyde d'éthylène et d'au moins un motif oxyde de propylène, répartis de manière alternée, aléatoire ou par blocs.

Selon encore un autre mode de réalisation préféré, E représente un enchaînement d'au moins un motif oxyde d'éthylène et d'au moins un motif oxyde de butylène, répartis de manière alternée, aléatoire ou par blocs.

Selon encore un autre mode de réalisation préféré, E représente un enchaînement d'au moins un motif oxyde de propylène et d'au moins un motif oxyde de butylène, répartis de manière alternée, aléatoire ou par blocs.

De préférence, m est égal à 1, et G et J désignent un groupe -OH.

De préférence, m est égal à 2, et G ou J désigne un groupe -OH.

De préférence, p et s ont la même signification.

De préférence, les groupements R₅ et R₆, indépendamment l'un de l'autre, désignent une chaine hydrocarbonée comprenant entre 6 et 18 atomes de carbone.

Selon un autre mode de réalisation préféré, R₅ est une chaîne hydrocarbonée entre 6 et 18 atomes de carbone.

Selon un mode de réalisation préféré de l'invention :
- le groupe formé par R₁, R₂ et l'atome de carbone auquel R₁ et R₂ sont attachés désigne le radical 2-octyle,
- n va de 3 à 15,
- A représente un enchaînement d'un ou plusieurs motifs choisis parmi les motifs oxyde d'éthylène, oxyde de propylène, oxyde de butylène et leurs mélanges,
- G désigne le groupe -OH,
- J désigne le groupe -OH,
- m, q et r valent 1.

Selon un autre mode de réalisation préféré de l'invention :
- le groupe formé par R₁, R₂ et l'atome de carbone auquel R₁ et R₂ sont attachés désigne le radical 2-octyle,
- n va de 3 à 15,
- A représente un enchaînement d'un ou plusieurs motifs choisis parmi les motifs oxyde d'éthylène, oxyde de propylène, oxyde de butylène et leurs mélanges,
- G désigne le groupe -OH,
- m va de 1 à 2,
- r vaut 0,
- q va de 1 à 2,
étant entendu que m + q + r = 3.

Selon un autre mode de réalisation préféré de l'invention :
- le groupe formé par R₁, R₂ et l'atome de carbone auquel R₁ et R₂ sont attachés désigne le radical 2-octyle,
- n va de 3 à 15,
- A représente un enchaînement d'un ou plusieurs motifs choisis parmi les motifs oxyde d'éthylène, oxyde de propylène, oxyde de butylène et leurs mélanges,
- m est égal à 3,
- r vaut 0, et
- q vaut 0.

Selon encore un autre mode de réalisation préféré de l'invention :
- le groupe formé par R₁, R₂ et l'atome de carbone auquel R₁ et R₂ sont attachés désigne le radical 2-octyle,
- n va de 3 à 15,
- A représente un enchaînement d'un ou plusieurs motifs choisis parmi les motifs oxyde d'éthylène, oxyde de propylène, oxyde de butylène et leurs mélanges,
- G désigne le groupe -O-[B]ₚ-R₅,
- dans lequel R₅ représente un groupe hydrocarboné linéaire, ramifié ou cyclique, saturé ou insaturé, comprenant de 6 à 18 atomes de carbone,
- B représente un enchaînement d'un ou plusieurs motifs choisis parmi les motifs oxyde d'éthylène, oxyde de propylène, oxyde de butylène et
- p désigne un nombre entier allant de 0 à 100,
- J désigne le groupe -OH,
- m va de1 à 2,
- q va de 1 à 2,
- r va de 0 à 1,
étant entendu que m + q + r= 3.

L'invention porte également sur les mélanges des esters de phosphate d'alcool secondaire selon la formule (I) tels que définis ci-dessus.

L'invention a également pour objet les sels des composés de la formule (I) telle que définie ci-dessus. Ces sels peuvent être des sels d'addition avec une base, organique ou minérale.

Ces sels peuvent être des sels de composés azotés organiques, des sels d'amines organiques, pouvant contenir un ou deux ou plusieurs groupements amine, de préférence des alkylamines, des alkyldiamines, des cycloalkylamines, des alkylamido(poly)amines, des amines aromatiques, et des alcanolamines, lesdites amines pouvant être primaires, secondaires ou tertiaires, et pouvant être également alcoxylées, de préférence des alkylamines éthoxylées, des alkydiamines éthoxylées, des alkylamido(poly)amines éthoxylées.

Les composés de la formule (I) peuvent également être des sels d'amines hétérocycliques, de préférence imidazoline, les dites amines hétérocycliques pouvant être alcoxylées, de préférence éthoxylées. Les composés de la formule (I) peuvent également être des sels d'urée.

Les sels des composés de formule (I) avec le cation ammonium (NH₄⁺) font aussi partie de l'invention.

Ces sels peuvent être des sels inorganiques. Avantageusement, les sels des composés de la formule (I) avec les éléments de la colonne 1 du tableau périodique des éléments (métaux alcalins) comme par exemple le lithium, le sodium et le potassium.

Avantageusement, les sels des composés de la formule (I) avec les éléments de la colonne 2 du tableau périodique des éléments (alcalino-terreux), par exemple le magnésium et le calcium.

Avantageusement, les sels des composés de la formule (I) avec les éléments des colonnes 3 à 12 du tableau périodique des éléments (métaux de transition), par exemple vanadium, manganèse, cobalt, zirconium, yttrium, fer, cadmium et zinc.

Avantageusement, les sels des composes de la formule (I) avec les éléments de la colonne 13 du tableau périodique des éléments, comme par exemple l'aluminium.

Avantageusement, les sels des composes de la formule (I) avec les terre rares (lanthanides et actinides), comme par exemple lanthane, cérium, thorium, uranium et plutonium.

Le composé décrit dans la formule (I) peut être obtenu avantageusement par la phosphatation d'un alcool secondaire alcoxylé.

La phosphatation consiste à faire réagir l'alcool avec un composé phosphoré choisi parmi l'anhydride phosphorique, l'acide (poly)phosphorique et un trihalogénure (par exemple trichlorure) de phosphoryle.

La synthèse d'esters de phosphate et les caractéristiques de ce procédé sont décrites par exemple dans le document « Encyclopedia of Chemical Technology, 4th Edition », Kirk-Othmer, vol. 23, pp.504-505, (1997), dans « Ullmann's Encyclopedia of Industrial Chemistry », 5th Edition, Elvers, B., Hawkins, S., Schulz, G., vol. A19, pp.562-564, ou encore dans « Phosphorous-containing Anionic Surfactants », Wasow, G., et également dans « Anionic Surfactants : Organic Chemistry », vol. 56, Marcel Dekker, (1996), pp. 552-564.

De manière préférée, l'alcool secondaire pour synthétiser le composé de la formule (I) est choisi parmi le 2-octanol et le méthylisobutylcarbinol, de préférence le 2-octanol.

Cet alcool présente un intérêt particulier à plusieurs titres. En effet, il s'agit d'un produit bio-sourcé, biodégradable et présentant un bon profil écotoxicologique. En outre, le point d'ébullition du 2 octanol est élevé et son prix de revient est tout à fait raisonnable.

Selon un mode de réalisation préféré, l'alcoxylation de l'alcool secondaire pour synthétiser le composé de la formule (I) est obtenu à l'aide d'un catalyseur de type cyanure dimétallique, appelé catalyseur DMC. De manière préférée, le catalyseur de type cyanure dimétallique peut être de toute nature connue de l'homme du métier. Ces catalyseurs sont décrits dans les brevets US6429342, US6977236 et PL398518.

Plus particulièrement, le catalyseur utilisé est l'hexacyanocobaltate de zinc, par exemple commercialisé par la Société Bayer sous le nom Arcol^{®} ou encore par la société Mexeo sous la dénomination MEO-DMC^{®}.

Un autre objet de l'invention est l'utilisation du composé de formule (I) selon l'invention et ses sels, seul ou en mélange en tant qu'agent tensioactif, agent tensio-actif à faible pouvoir moussant, agent de mouillage, agent moussant, hydrotrope, détergent, solvant, solvant réactif, agent de coalescence, compatibilisant, agent émulsifiant, dispersant, intermédiaire chimique, inhibiteur de corrosion, désémulsionnant, plastifiant, séquestrant, inhibiteur de dépôts minéraux, liquide ionique, stabilisant, lubrifiant, additif pour bitumes, additif pour désencrage, agent gélifiant dans les huiles, collecteur de flottation pour les minerais, adjuvant de fabrication (« processing aid » en langue anglaise) dans la manufacture des objets plastiques, agent antistatique, additif pour les revêtements d'engrais, pour la protection des plantes, pour le traitement des textiles et pour la récupération assistée du pétrole, pour la production d'électrodes et d'électrolytes pour batteries.

La présente invention a en outre pour objet une composition comprenant au moins un composé de formule (I) tel que défini précédemment, et/ou un de ses sels, seul ou en mélange, avec un ou plusieurs solvants aqueux, organiques, hydro-organiques, tels que par exemple eau, alcools, glycols, polyols, huiles minérales, huiles végétales, et autres, seuls ou en mélanges de deux pu plusieurs d'entre eux, en toutes proportions.

La composition selon l'invention peut également contenir un ou plusieurs additifs et charges bien connus de l'homme du métier, tels que par exemple, et à titre non limitatif, tensio-actifs anioniques, cationiques, amphotères, non-ioniques, modificateurs de rhéologie, dés-émulsionnants, agents anti-dépôt, agents anti-mousse, dispersants, agents de contrôle du pH, colorants, anti-oxydants, conservateurs, inhibiteurs de corrosion, biocides, et autres additifs tels que par exemple produits soufrés, borés azotés, phosphatés, et autres. Les natures et quantités des additifs et charges peuvent varier dans de grandes proportions selon la nature de l'application envisagée et pourront facilement être adaptées par l'homme du métier.

L'invention est illustrée par les exemples suivants, qui ne sont nullement limitatifs.

### EXEMPLES

Le 2-octanol (CAS RN 123-96-6) utilisé est le 2 octanol Oleris^{®} de grade « Refined » (pureté > 99%), commercialisé par Arkema France.

### Exemple 1 : Synthèse d'un ester de phosphate de 2-octanol propoxylé

### Étape 1a : Propoxylation du 2-octanol

Dans un autoclave de 4 L, propre et sec, on charge 591 g (4,54 M) de 2-octanol séché à moins de 200 ppm d'eau et 0,06 g (100 ppm) de catalyseur DMC Arcol^{®}. Le réacteur est refermé, purgé à l'azote et l'étanchéité sous pression est vérifiée. On pressurise le réacteur à l'azote sous 0,225 MPa à 27°C.

Le milieu réactionnel est porté à 90°C sous agitation, puis la température est augmentée jusqu'à 120°C. À cette température de 120°C, on introduit 40 g d'oxyde de propylène. Lorsque l'amorçage de la réaction est constaté, on introduit le reste de l'oxyde de propylène soit en tout 792 g (13,62 M) sur 60 minutes à une température de 140°C-150°C. En fin d'addition, on maintient la température pendant 30 minutes puis on strippe à l'azote l'oxyde de propylène résiduel. On refroidit le réacteur à 60°C et on soutire 1381 g de 2-octanol alcoxylé comprenant 3 motifs oxyde de propylène.

### Étape 1b : Phosphatation du 2-octanol propoxylé

### Méthode a) : Phosphatation avec l'anhydride phosphorique

Dans un réacteur de 1 L, sous atmosphère d'azote, on charge 456 g (1,50 M) de 2-octanol propoxylé obtenu précédemment. Le réacteur est chauffé à 60°C. 71 g (0,5 M) d'anhydride phosphorique sont alors ajoutés. L'addition de l'anhydride phosphorique est réalisée tout en veillant à ce que la température de 80°C ne soit pas dépassée. À la fin de l'addition, la température du réacteur est maintenue à 80°C pendant 3 heures sous agitation. À la fin de la réaction, le réacteur est refroidi jusqu'à une température de 60°C et le produit est isolé.

On récupère 521 g d'ester de phosphate de 2-octanol alcoxylé comprenant 3 motifs oxyde de propylène.

La réaction est schématisée ci-dessous :

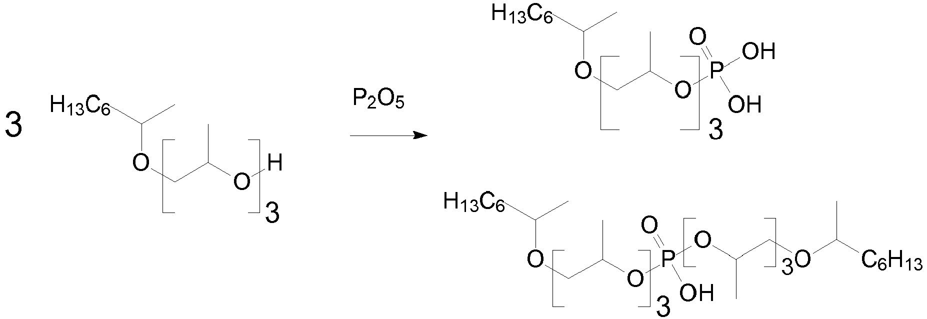

### Méthode b) : Phosphatation avec l'acide polyphosphorique

Dans un réacteur de 1 L, sous atmosphère d'azote, on charge 186 g (0,61 M) de 2-octanol propoxylé à 3 OP. Le réacteur est chauffé à 50°C et 67,6 g (0,2 M) d'acide polyphosphorique (115% équivalent H₃PO₄) sont alors ajoutés goutte à goutte. Le réacteur est chauffé jusqu'à une température de 60°C, sous agitation.

La réaction est suivie par détermination d'indice d'acide. Il est considéré que la réaction est terminée lorsque les valeurs ne varient pas. Le réacteur est alors refroidi à 40°C.

On récupère 240 g d'ester de phosphate de 2-octanol alcoxylé comprenant 3 motifs oxyde de propylène.

La réaction est schématisée ci-dessous :

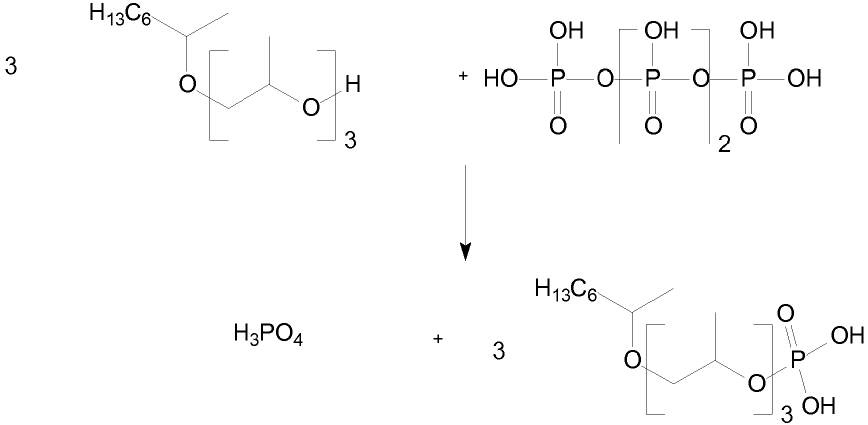

### Méthode c) : Phosphatation avec le trichlorure de phosphoryle

Dans un réacteur de 1 L, sous atmosphère d'azote, on charge 456 g (1,50 M) de 2-octanol propoxylé obtenu précédemment. Le réacteur est chauffé à 70°C. 76,5 g (0,50 M) de trichlorure de phosphoryle anhydre sont alors ajoutés goutte à goutte. Le réacteur est ensuite chauffé jusqu'à une température de 90°C sous agitation.

L'acide chlorhydrique est éliminé en continu par un barbotage d'azote dans le milieu réactionnel. La réaction est suivie par la quantité d'acide chlorhydrique produit. Il est considéré que la réaction est terminée lorsqu'il ne se dégage plus d'HCl. Le réacteur est alors refroidi à 60°C.

On récupère 470 g de phosphate de 2-octanol alcoxylé comprenant 3 motifs oxyde de propylène.

La réaction est schématisée ci-dessous :

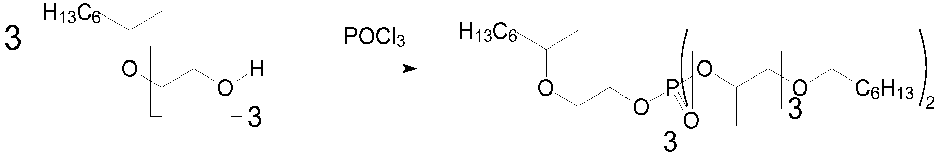

### Exemple 2 : ester phosphate de 2-octanol éthoxylé

### Étape 2.a : Éthoxylation du 2-octanol

Dans un autoclave de 4 L, propre et sec, on charge 619 g (4,76 M) de 2-octanol séché à moins de 200 ppm d'eau et 0,06 g (100 ppm) de catalyseur DMC Arcol^{®}. Le réacteur est refermé, purgé à l'azote et l'étanchéité sous pression est vérifiée. On pressurise le réacteur à l'azote sous 0,269 MPa à 20°C.

Le milieu réactionnel est porté à 120°C sous agitation. À cette température de 120°C, on introduit 40 g d'oxyde d'éthylène. Lorsque l'amorçage de la réaction est constaté, on introduit le reste de l'oxyde d'éthylène soit en tout 628 g (14,27 M) sur 60 minutes à une température de 140-150°C. En fin d'addition, on maintient la température pendant 30 minutes puis on strippe à l'azote l'oxyde d'éthylène résiduel. On refroidit le réacteur à 60°C et on soutire 1240 g de 2-octanol alcoxylé comprenant 3 motifs oxyde d'éthylène. (IOH : 210 mg de KOH/g et coloration de 26 Hz).

### Étape 2.b : Phosphatation du 2-octanol éthoxylé

On reproduit la réaction de phosphatation avec l'anhydride phosphorique comme décrit à l'exemple 1, étape 1b, méthode a), mais avec le produit obtenu à l'étape 2a ci-dessus.

### Exemple 3 : Salification avec un métal

Dans un réacteur de 1 L, on charge 465 g (1 M) du phosphate de 2-octanol éthoxylé obtenu à l'exemple 2 comme décrit précédemment. Le réacteur est chauffé à 125°C. 81 g (1 M) d'oxyde de zinc sont alors ajoutés. L'addition de l'oxyde de zinc est réalisée sur agitation. À la fin de l'addition, la température du réacteur est maintenue à 125°C pendant 2 heures sous agitation. À la fin, le réacteur est refroidi jusqu'à une température de 60°C et le produit est isolé.

On récupère environ 540 g du sel de zinc avec l'ester de phosphate de 2-octanol alcoxylé comprenant 3 motifs oxyde d'éthylène.

### Exemple 4 : Salification avec une amine grasse

Dans un réacteur de 1 L, on charge 465 g (1 M) du phosphate de 2-octanol éthoxylé obtenu à l'exemple 2 comme décrit précédemment. Le réacteur est chauffé à 80°C. 259 g (1 M) d'une amine grasse comportant une chaîne d'environ 18 atomes de carbone commercialisée par Arkema France sous le nom de NORAM SH^{®} sont alors ajoutés sous agitation tout en veillant à ce que la température de 80°C ne soit pas dépassée. À la fin de l'addition, la température du réacteur est maintenue à 80°C pendant 15 minutes sous agitation. À la fin, le réacteur est refroidi et récupéré.

On récupère environ 720 g du sel d'amine grasse de l'ester de phosphate de 2-octanol alcoxylé comprenant 3 motifs oxyde de éthylène.

## Revendications

1. Composé de formule (I) suivante, ainsi que ses sels d'addition avec une base organique ou minérale, les solvates, et leurs mélanges : 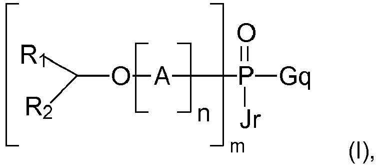 dans laquelle :
- les groupements R₁ et R₂, identiques ou différents, représentent, indépendamment l'un de l'autre, un groupement hydrocarboné linéaire, ramifié ou cyclique, saturé ou insaturé, comprenant de 1 à 6 atomes de carbone, étant entendu que la somme des atomes de carbone des groupements R₁ et R₂ va de 2 à 7 ; R₁ et R₂ peuvent former ensemble et avec l'atome de carbone qui les porte, un cycle à 6, 7 ou 8 sommets
- n est un nombre entier compris entre, bornes incluses, 1 et 100, de préférence entre 2 et 100, de préférence encore entre 3 et 100, plus particulièrement entre 5 et 100, et de manière très préférée entre 10 et 100,
- A représente un enchaînement d'un ou plusieurs motifs choisis parmi les motifs oxyde d'éthylène, oxyde de propylène, oxyde de butylène et leurs mélanges,
- G désigne le groupe -O-[B]ₚ-R₅,
où R₅ représente un groupement choisi l'atome d'hydrogène ou un groupe hydrocarboné linéaire, ramifié ou cyclique, saturé ou insaturé, comprenant de 1 à 30 atomes de carbone, B représente un enchaînement d'un ou plusieurs motifs choisis parmi les motifs oxyde d'éthylène, oxyde de propylène, oxyde de butylène, et leurs mélanges et p désigne un nombre entier allant de 0 à 100,
- J désigne le groupe -O-[E]ₛ₋R₆,
où R₆ représente un groupement choisi l'atome d'hydrogène ou un groupe hydrocarboné linéaire, ramifié ou cyclique, saturé ou insaturé, comprenant de 1 à 30 atomes de carbone, E représente un enchaînement d'un ou plusieurs motifs choisis parmi les motifs oxyde d'éthylène, oxyde de propylène, oxyde de butylène et leurs mélanges et s désigne un nombre entier allant de 0 à 100,
- m désigne un nombre entier allant de 1 à 3 ;
- q et r désignent des nombres entiers allant de 0 à 2,
étant entendu que m + q + r = 3.

2. Composé selon la revendication précédente, **caractérisé en ce que** le groupe formé par R₁, R₂ et l'atome de carbone, auquel R₁ et R₂ sont attachés, est choisi parmi le radical 2-octyle et le radical 4-méthyl-2-pentyle, plus particulièrement, le radical 2-octyle.

3. Composé selon l'une quelconque des revendications précédentes, **caractérisé en ce que** n est compris entre, bornes incluses, 1 et 75, de préférence entre 2 et 75, de préférence encore entre 3 et 75, plus particulièrement entre 5 et 75, et de manière très préférée entre 10 et 75.

4. Composé selon l'une quelconque des revendications précédentes, **caractérisé en ce que** p et s, indépendamment l'un de l'autre sont compris entre, bornes incluses, 0 et 75, de préférence entre 1 et 75, plus préférentiellement entre 2 et 75, de préférence encore entre 3 et 75, plus particulièrement entre 5 et 75, et de manière très préférée entre 10 et 75.

5. Composé selon l'une quelconque des revendications précédentes, **caractérisé en ce qu'**il se trouve sous forme de sel d'ammonium ou sous forme de sel d'amine organique, l'amine organique étant choisie parmi les alkylamines, les alkyldiamines, les cycloalkylamines, les alkylamido(poly)amines, les amines aromatiques, les alcanolamines, lesdites amines pouvant être primaires, secondaires ou tertiaires, et pouvant être également alcoxylées, et également parmi les amines hétérocycliques, l'urée, ainsi que leurs mélanges.

6. Composé selon l'une quelconque des revendications 1 à 4, **caractérisé en ce qu'**il se trouve sous forme de sel inorganique choisi parmi les éléments de la colonne 1 du tableau périodique des éléments (métaux alcalins) ; les éléments de la colonne 2 du tableau périodique des éléments (alcalino-terreux), les éléments des colonnes 3 à 12 du tableau périodique des éléments (métaux de transition), les éléments de la colonne 13 du tableau périodique des éléments, les terre rares (lanthanides et actinides), et leur mélanges.

7. Utilisation du composé de formule (I) et ses sels, seul ou en mélange, tel que défini à l'une quelconque des revendications 1 à 6, en tant qu'agent tensioactif, agent tensio-actif à faible pouvoir moussant, agent de mouillage, agent moussant, hydrotrope, détergent, solvant, solvant réactif, agent de coalescence, compatibilisant, agent émulsifiant, dispersant, intermédiaire chimique, inhibiteur de corrosion, désémulsionnant, plastifiant, séquestrant, inhibiteur de dépôts minéraux, liquide ionique, stabilisant, lubrifiant, additif pour bitumes, additif pour désencrage, agent gélifiant dans les huiles, collecteur de flottation pour les minerais, adjuvant de fabrication dans la manufacture des objets plastiques, agent antistatique, additif pour les revêtements d'engrais, pour la protection des plantes, pour le traitement des textiles et pour la récupération assistée du pétrole, pour la production d'électrodes et d'électrolytes pour batteries.

8. Composition comprenant au moins un composé de formule (I) et/ou un de ses sels, seul ou en mélange, tel que défini à l'une quelconque des revendications 1 à 6, avec un ou plusieurs solvants aqueux, organiques, hydro-organiques, et éventuellement un ou plusieurs additifs et charges.

## Patentansprüche

1. Verbindung nach der folgenden Formel (I) sowie deren Additionssalze mit einer organischen oder mineralischen Base, die Solvate und deren Mischungen: 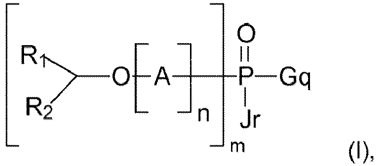 in welcher:
- die Gruppe R₁ und R₂, welche vollkommen gleichartig oder verschiedenartig ist, unabhängig voneinander für eine geradkettige, verzweigte oder zyklische Kohlenstoffwassergruppe gesättigter oder ungesättigter Art stehen, die 1 bis 6 Kohlenstoffatome umfasst, wobei es sich versteht, dass die Summe der Kohlenstoffatome der Gruppen R₁ und R₂ im Bereich von 2 bis 7 liegt; R₁ und R₂ zusammen mit dem Kohlenstoffatom, an welches sie gebunden sind, einen 6-, 7- oder 8-gliedrigen Ring bilden können,
- n eine ganze Zahl ist, die im Bereich von 1 bis 100, vorzugsweise von 2 bis 100, stärker bevorzugt von 3 bis 100, insbesondere von 5 bis 100 und mit besonderem Vorzug von 10 bis 100 einschließlich der Grenzwerte liegt,
- A für eine Abfolge eines oder mehrere Bausteine steht, die aus den Bausteinen Ethylenoxid, Propylenoxid, Butylenoxid und deren Mischungen ausgewählt sind,
- G für die Gruppe -O-[B]ₚ-R₅ steht,
wobei R₅ für eine Gruppe steht, die aus dem Wasserstoffatom oder einer geradkettigen, verzweigten oder zyklischen Kohlenwasserstoffgruppe gesättigter oder ungesättigter Art ausgewählt ist, welche 1 bis 30 Kohlenstoffatome umfasst, B für eine Abfolge eines oder mehrerer Bausteine steht, die aus den Bausteinen Ethylenoxid, Propylenoxid, Butylenoxid und deren Mischungen ausgewählt sind, und p für eine ganze Zahl im Bereich von 0 bis 100 steht,
- J für die Gruppe -O-[E]ₛ-R₆ steht,
wobei R₆ für eine Gruppe steht, die aus dem Wasserstoffatom oder einer geradkettigen, verzweigten oder zyklischen Kohlenwasserstoffgruppe gesättigter oder ungesättigter Art ausgewählt ist, welche 1 bis 30 Kohlenstoffatome umfasst, E für eine Abfolge eines oder mehrerer Bausteine steht, die aus den Bausteinen Ethylenoxid, Propylenoxid, Butylenoxid und deren Mischungen ausgewählt sind, und s für eine ganze Zahl im Bereich von 0 bis 100 steht,
- m für eine ganze Zahl im Bereich von 1 bis 3 steht;
- q und r für ganze Zahlen im Bereich von 0 bis 2 stehen;
wobei es sich versteht, dass m + q + r = 3 ist.

2. Verbindung nach dem vorhergehenden Anspruch, **dadurch gekennzeichnet, dass** die Gruppe, welche von R₁, R₂ und dem Kohlenstoffatom gebildet wird, an welches R₁ und R₂ gebunden sind, aus dem 2-Octylrest und dem 4-Methyl-2-pentylrest ausgewählt ist, wobei es sich insbesondere um den 2-Octylrest handelt.

3. Verbindung nach einem beliebigen der vorhergehenden Ansprüche, **dadurch gekennzeichnet, dass** n im Bereich von 1 bis 75, vorzugsweise von 2 bis 100, stärker bevorzugt von 3 bis 75, insbesondere von 5 bis 75 und mit besonderem Vorzug von 10 bis 75 einschließlich der Grenzwerte liegt,

4. Verbindung nach einem beliebigen der vorhergehenden Ansprüche, **dadurch gekennzeichnet, dass** p und s unabhängig voneinander im Bereich von 0 bis 75, vorzugsweise von 1 bis 75, stärker bevorzugt von 2 bis 75, noch stärker bevorzugt von 3 bis 75, insbesondere von 5 bis 75 und mit besonderem Vorzug von 10 bis 75 einschließlich der Grenzwerte liegen.

5. Verbindung nach einem beliebigen der vorhergehenden Ansprüche, **dadurch gekennzeichnet, dass** sie in Form eines Ammoniumsalzes oder in Form eines Salzes mit einem organischen Amin vorliegt, wobei das organische Amin aus den Alkylaminen, den Alkyldiaminen, den Cycloalkylaminen, den Alkylamido(poly)aminen, den aromatischen Aminen, den Alkanolaminen, wobei diese Amine primärer, sekundärer oder tertiären Art sein können und sie weiterhin alkoxyliert sein können, und weiterhin aus den heterozyklischen Aminen, Harnstoff sowie deren Mischungen ausgewählt ist.

6. Verbindung nach einem beliebigen der Ansprüche 1 bis 4, **dadurch gekennzeichnet, dass** sie in Form eines anorganischen Salzes vorliegt, das aus den Elementen der Spalte 1 des Periodensystems der Elemente (Alkalimetalle); den Elementen der Spalte 2 des Periodensystems der Elemente (Erdalkali), den Elementen der Spalte 3 des Periodensystems der Elemente (Übergangsmetalle), den Elementen der Spalte 13 des Periodensystems der Elemente, den seltenen Erden (Lanthaniden und Actiniden) und deren Mischungen ausgewählt ist.

7. Verwendung der Verbindung nach Formel (I) und von deren Salzen, allein oder in Mischung, gemäß der Begriffsbestimmung in einem beliebigen der Ansprüche 1 bis 6, als Tensid, wenig schäumendes Tensid, Netzmittel, Schaumbildner, hydrotropes Mittel, Reinigungsmittel, Lösungsmittel, reaktionsfähiges Lösungsmittel, Koaleszenzmittel, Phasenvermittler, Emulgator, Dispersionsmittel, chemisches Zwischenprodukt, Korrosionshemmer, Emulsionsbrecher, Weichmacher, Komplexierungsmittel, Mittel zur Hemmung mineralischer Abscheidungen, ionische Flüssigkeit, Stabilisator, Schmiermittel, Bitumenzusatzstoff, druckfarbenentfernender Zusatzstoff, Gelbildner für Öle, Flottationshilfsmittel für Erze, Herstellungsadjuvans bei der Fertigung von Kunststoffgegenständen, Antistatikum, Zusatzstoff für Düngemittelbeschichtungen, für Pflanzenschutzzwecke, zur Ausrüstung von Textilien und zur tertiären Erdölgewinnung, zur Herstellung von Elektroden und Elektrolyten für Batterien.

8. Zusammensetzung, die mindestens eine Verbindung nach Formel (I) und/oder eines von deren Salzen, allein oder in Mischung, gemäß der Begriffsbestimmung in einem beliebigen der Ansprüche 1 bis 6 mit einem oder mehreren wässrigen, organischen, wässrig-organischen Lösungsmitteln sowie möglicherweise einem oder mehreren Zusatzstoffen und Füllstoffen umfasst.

## Claims

1. Compound of formula (I) below, and also the addition salts thereof with an organic or mineral base, the solvates, and mixtures thereof: 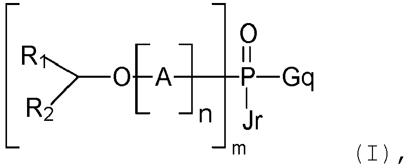 in which:
- the groups R₁ and R₂, which may be identical or different, represent, independently of each other, a linear, branched or cyclic, saturated or unsaturated hydrocarbon-based group, comprising from 1 to 6 carbon atoms, it being understood that the sum of the carbon atoms of the groups R₁ and R₂ ranges from 2 to 7, R₁ and R₂ may form, together and with the carbon atom that bears them, a 6-, 7- or 8-membered ring,
- n is an integer between, limits inclusive, 1 and 100, preferably between 2 and 100, more preferably between 3 and 100, more particularly between 5 and 100 and very preferably between 10 and 100,
- A represents a sequence of one or more units chosen from ethylene oxide, propylene oxide and butylene oxide units, and mixtures thereof,
- G denotes the group -O-[B]ₚ-R₅,
in which R₅ represents a group chosen from a hydrogen atom or a linear, branched or cyclic, saturated or unsaturated hydrocarbon-based group, comprising from 1 to 30 carbon atoms, B represents a sequence of one or more units chosen from ethylene oxide, propylene oxide and butylene oxide units, and mixtures thereof, and p denotes an integer ranging from 0 to 100,
- J denotes the group -O-[E]ₛ-R₆,
in which R₆ represents a group chosen from a hydrogen atom or a linear, branched or cyclic, saturated or unsaturated hydrocarbon-based group, comprising from 1 to 30 carbon atoms, E represents a sequence of one or more units chosen from ethylene oxide, propylene oxide and butylene oxide units, and mixtures thereof, and s denotes an integer ranging from 0 to 100,
- m denotes an integer ranging from 1 to 3,
- q and r denote integers ranging from 0 to 2,
it being understood that m + q + r = 3.

2. Compound according to the preceding claim, **characterized in that** the group formed by R₁, R₂ and the carbon atom to which R₁ and R₂ are attached is chosen from the 2-octyl radical and the 4-methyl-2-pentyl radical, more particularly the 2-octyl radical.

3. Compound according to either of the preceding claims, **characterized in that** n is between, limits inclusive, 1 and 75, preferably between 2 and 75, more preferably between 3 and 75, more particularly between 5 and 75 and very preferably between 10 and 75.

4. Compound according to any one of the preceding claims, **characterized in that** p and s, independently of each other, are between, limits inclusive, 0 and 75, preferably between 1 and 75, more preferentially between 2 and 75, more preferably between 3 and 75, more particularly between 5 and 75 and very preferably between 10 and 75.

5. Compound according to any one of the preceding claims, **characterized in that** it is in ammonium salt form or in organic amine salt form, the organic amine being chosen from alkylamines, alkyldiamines, cycloalkylamines, alkylamido(poly)amines, aromatic amines and alkanolamines, said amines possibly being primary, secondary or tertiary, and also possibly being alkoxylated, and also from heterocyclic amines, urea, and also mixtures thereof.

6. Compound according to any one of Claims 1 to 4, **characterized in that** it is in the form of an inorganic salt chosen from the elements from column 1 of the Periodic Table of the Elements (alkali metals); the elements from column 2 of the Periodic Table of the Elements (alkaline-earth metals), the elements from columns 3 to 12 of the Periodic Table of the Elements (transition metals), the elements from column 13 of the Periodic Table of the Elements, rare earths (lanthanides and actinides), and mixtures thereof.

7. Use of the compound of formula (I) and salts thereof, alone or as a mixture, as defined in any one of Claims 1 to 6, as surfactant, low-foaming surfactant, wetting agent, foaming agent, hydrotrope, detergent, solvent, reactive solvent, coalescer, compatibilizer, emulsifying agent, dispersant, chemical intermediary, corrosion inhibitor, demulcent, plasticizer, sequestrant, mineral deposition inhibitor, ionic liquid, stabilizer, lubricant, bitumen additive, deinking additive, oil gellant, ore flotation collector, processing aid in the manufacture of plastics, antistatic agent, fertilizer coating additive, for plant protection, for treating textiles and for enhanced oil recovery, for the production of electrodes and electrolytes for batteries.

8. Composition comprising at least one compound of formula (I) and/or a salt thereof, alone or as a mixture, as defined in any one of Claims 1 to 6, with one or more aqueous, organic or aqueous-organic solvents, and optionally one or more additives and fillers.
